# EUROPEAN PATENT APPLICATION

(11) **EP 1 657 191 A1**
(43) Date of publication of application: **17.05.2006**
(21) Application number: 04425847.3
(22) Date of filing: 12.11.2004
(51) Int. Cl.: B65G 57/03, B65G 61/00

(54) **A process and plant for palletizing deformable and unstable containers**

(71) Applicant: Bema s.r.l., 42030 Viano (Reggio Emilia) (IT)
(72) Inventor: Grassi, Antonio, 42031 Baiso (Reggio Emilia) (IT)
(74) Representative: Gotra, Stefano

(57) **Abstract**

The process for palletising deformable containers comprises the following stages: spreading a layer of glue over at least a portion of the deformable containers (30); depositing at least one layer of deformable containers (30) on a pallet (40) in such a way that the portion of the deformable containers (30) on which the glue is spread is facing in an upwards direction; winding at least one circumference layer of extensible film (50) around the at least one layer of containers (30) and the pallet (40), so that the extensible film (50) is wrapped at least partially below the pallet (40), and is anchored to the pallet (40); progressively depositing, in successive overlying layers, a determined number of deformable containers (30) on the pallet (40), so that a portion of the deformable containers (30) on which the glue is spread is facing upwards; progressive winding of successive circumferences of extensible film (50) around the layers of deformable containers (30). This winding is done in such a way that at least a length of extensible film (50) is arranged about each layer of deformable containers (30) successively to the laying of the containers (30) on the underlying layers.

## Description

Deformable containers of known type are, for example, plastic or paper bags, or bags made of other materials, all commonly used in the ceramics or construction industry for containing loose materials such as sand, dry or wet malts, earthen materials for casting, etc.

These bags are at present distributed in metal crates or single-use sacks.

Metal crates have the advantage of being usable several times, but involve special space needs for stacking when empty. The also require some maintenance operations such as painting and repair, as they will inevitably be damaged due to the type of use they are subject to. A further drawback is that quite often they are not returned by the user. Managing these empty crates also requires logistical operations, in which the delivery of full crates is made to coincide with the return of the empties, so that transport costs are kept under control.

A further drawback of metal crates is that they are generally emptied by hand. The fmal bag users, whether for space or economy problems, do not possess machines for unloading the bags from the crates. At building sites, for example, where sacks are frequently located on scaffolding or in any case in elevated positions to enable use at higher floors, the installation of these machines can be distinctly problematic. It is also necessary to consider the expenses for buying and using unloading machines, which are rarely justifiable when considering the volume bags used. Generally the operators remove the bags by hand, tipping over the crate, when possible, or lifting the bags out of the crates, a manoeuvre which exposes the operator to considerable weight-lifting and risk of injury. The crate itself is quite unwieldy and therefore a nuisance, especially in small working spaces.

The sacks have the advantage of not requesting very large spaces for storage, nor do they require maintenance and transport for "empties", but they do have the drawback of being usable only once and therefore constituting an extra packaging cost. Then they have to be correctly disposed of, which further adds to costs. Their disadvantages at the workplace are the same as those for metal crates, with the added problem that the bags are deformable and thus relatively unstable and difficult to move using cranes or lift trucks.

A solution to the above-described problems is provided by a process and a machine for the process, proposed by the same applicant.

The process comprises the following stages: wrapping at least a first layer of extensible film around the hopper and the pallet so that at least a first tract of the film is below the pallet at least over a part of a breadth of the film; translating the pallet downwards, progressively wrapping the extensible film in order for the film to be arranged, for a part of a breadth thereof, about a lower portion of the hopper, and for a further part of the breadth thereof, about the pallet, while successive layers of deformable containers are deposited on the pallet through the hopper.

The machine comprises: a platform for a pallet; a hopper located above the platform, which is conformed and arranged in such a way as to direct successive layers of deformable containers onto the pallet while restraining the containers peripherally. Means for arranging extensible film around the hopper operate so that, by effect of a relative vertical sliding motion between the pallet and the hopper, the extensible film transfers from the hopper to the successive layers of deformable containers, peripherally restraining the containers.

Though solving the problems connected to the use of metal crates and bags, the process proposed can be improved in terms of simplicity and economy of operation.

The actuation of the process requires the use of a special machine, equipping the hopper, for peripheral containment of the deformable containers. The hopper also requires the use of an extensible film of a quite narrow width, so that to complete a winding operation on a pallet, a considerable amount of film is required. The narrow width of the film also does not enable the top of the pallet to be covered, so it is necessary to apply a hood of heat-retractable film on the top of the pallet after completing the winding operation using the extensible film, with a further use of material and an increase in working times; also necessary is a number of straps about the pallet for further stabilisation of the load.

The main aim of the present invention is to provide a process for palletising deformable and unstable containers, and a plant for actuating the process, which overcome the drawbacks existing in the prior art.

Further characteristics and advantages of the invention will better emerge from the detailed description that follows, made with reference to the accompanying figures of the drawings, here represented by way of non-limiting example, and in which:
figure 1 is a first stage of the process according to the invention, with some parts of the plant which is also object of the invention;
figures 2, 3 4 show successive stages of the process;
figure 5 is a schematic plan view of a preferred embodiment of the plant according to the invention.

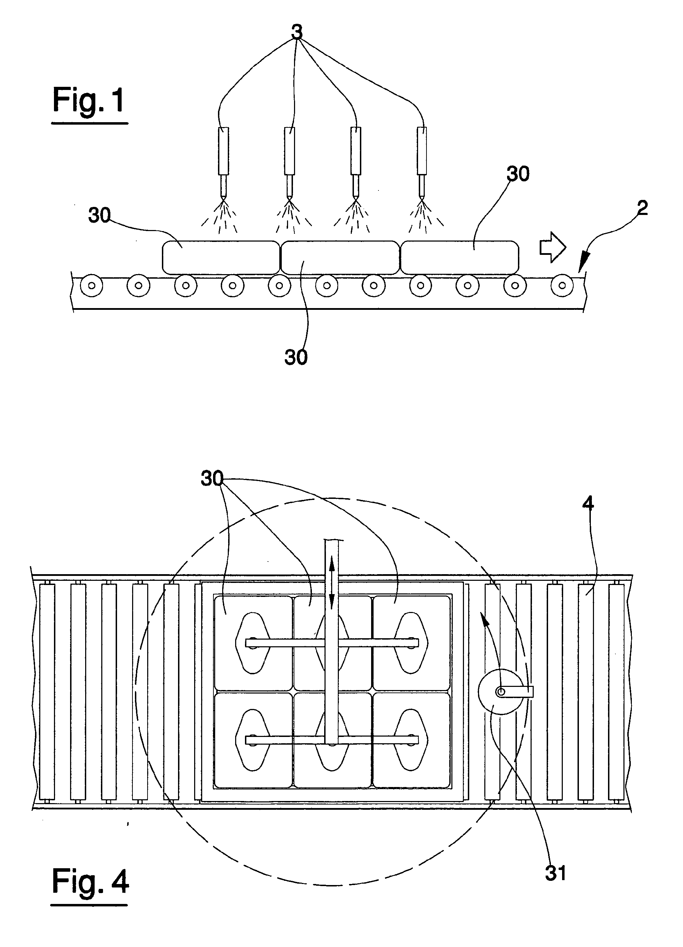

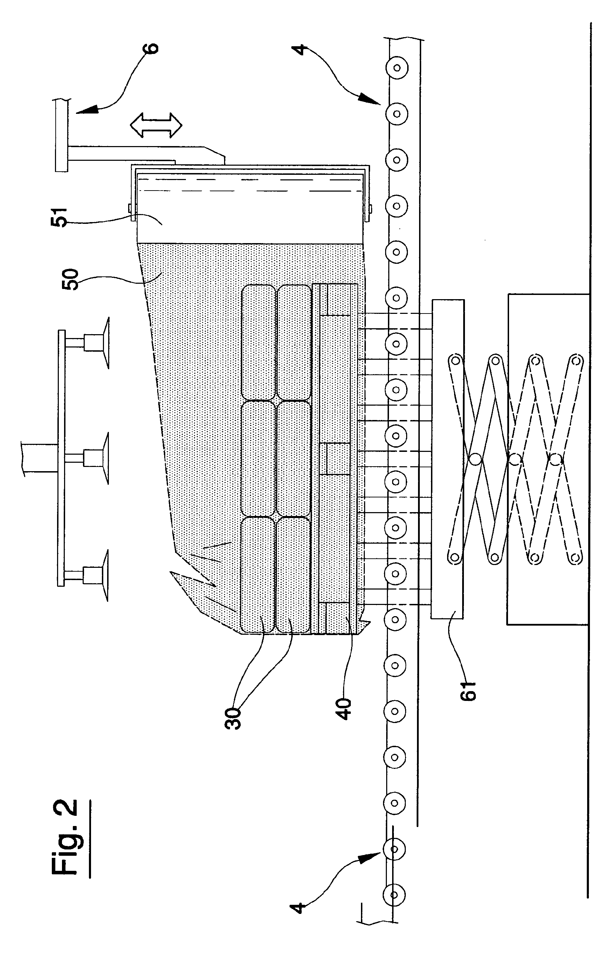

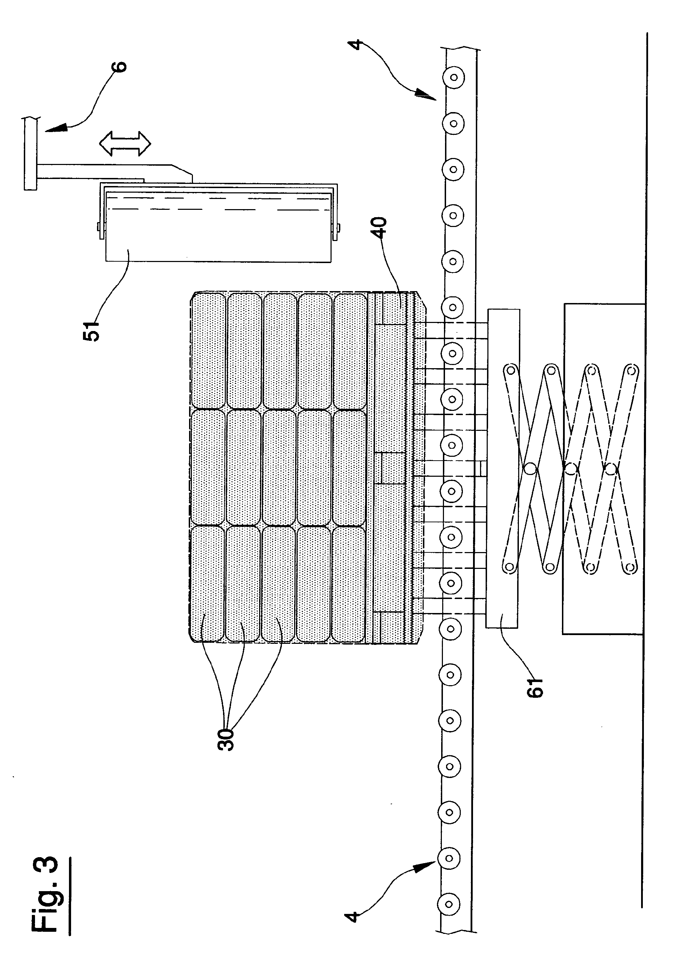

With reference to the figures of the drawings, the process of the present invention comprises the following stages:
spreading a layer of glue over at least a portion of the deformable containers 30 (figure 1);
depositing at least one layer of deformable containers 30 on a pallet 40 in such a way that the portion of the deformable containers 30 on which the glue is spread is facing in an upwards direction;
winding at least one circumference layer of extensible film 50 around the at least one layer of containers 30 and the pallet 40, so that the extensible film 50 is wrapped at least partially below the pallet 40, and is anchored to the pallet 40 (figure 2);
progressively depositing, in successive overlying layers, a determined number of deformable containers 30 on the pallet 40, so that a portion of the deformable containers 30 on which the glue is spread is facing upwards (figure 3);
progressive winding of successive circumferences of extensible film 50 around the layers of deformable containers 30. This winding is done in such a way that at least a length of extensible film 50 is arranged about each layer of deformable containers 30 successively to the laying of the containers 30 on the underlying layers (figure 3).

The described stages of winding are done by a reel of extensible film 50 which rotates, unwinding, about the pallet 40, and contemporaneously translates upwards along a vertical direction. The movements of the reel, which enable the wrapping of the pallet and the layers of deformable containers 30 deposited on it, are interrupted during laying of the layers of deformable containers 30. The alternating of laying stages and winding stages is the following: laying of a first layer of containers on the pallet 40 (or more than one layer, as will be explained herein below), winding of the first layer of containers and the pallet 40, rest phase of the reel during the laying of a subsequent layer (or more than one subsequent layer) of containers, winding of the subsequent layer (or subsequent layers), rest phase once more of the reel during the laying of a subsequent layer, or layers, and so on.

The number of layers of deformable containers 30 which initially, i.e. before actuating each stage of winding, are deposited on the pallet 40, is not necessarily limited to two. Thus it is possible that instead of a single layer of deformable containers being deposited on the pallet 40 and wound with the film, a predetermined number of successive layers of deformable containers could be laid on top of the first layer. When the determined number of initial layers has been deposited, a first stage of wrapping of the layers and the pallet 40 begins, with one or more rounds of the film 50; the film 50 is always arranged partly below the pallet 40.

The progressive winding of the layers of containers 30 deposited after the initial layers is not necessarily done with at least one circumferential round of extensible film 50 arranged about each layer of deformable containers 30 after being arranged on the underlying layers. More than one layer of containers 30 can be deposited, for example two or three layers, and the winding operation can be done about them using more than one circumferential round of extensible film 50.

The glue spread on the containers 30 has the function of anchoring each layer of containers to the layer below. The anchoring effect of the glue gives the layers of containers sufficient stability to enable direct winding of the pallet and the layers of containers by the film, without there being any need to arranged barriers for laterally containing the containers, as happens in the prior art. The extensible film, in order to be wound, must be placed at a certain degree of tension. If the second layer of deformable containers 30 is not sufficiently anchored to the underlying layer, contact with the extensible film 50 would cause disordered displacements of the deformable containers 30 of the second layer.

Preferably the spreading of the glue on the containers 30 will be done using a spraying technique.

The progressive winding of the layers of containers 30 with successive rounds of extensible film 50, which as previously specified is done in such a way that at least one round of extensible film 50 is arranged about each layer of deformable containers 30 successively to the depositing of the layer on the underlying layers, preferably includes a final stage in which one or more rounds of extensible film 50 are wound about the top layer or layers of deformable containers in such a way that the extensible film 50 is arranged at least partially above the upper layer of the containers 30. In this final stage of winding the reel of extensible film 50 projects above the upper layer of containers 30 by an amount which corresponds to a predetermined width of the extensible film itself. This portion of the width of the film is arranged above the upper layer of deformable containers 30, and performs a hood function, further stabilising the deformable containers 30.

After the fmal stage of the progressive winding of the layers of deformable containers 30 with successive rounds of extensible film 50, or alternatively thereto, at least one layer of extensible film 50 can be stretched onto and above the final layer of deformable containers, so that the layer of extensible film completely covers the fmal layer of the containers. The fmal layer of film stretched above the final layer of deformable containers 30 has, fundamentally, the function of a hood covering the top of the full pallet 40. The film is wound very rapidly, by directing the reel from which the film unwinds in a horizontal position. The stage described can, if necessary, precede the already-described final winding stage of the pallet 40 and the layers of deformable containers 30 deposited thereon.

After the completion of the stage of progressive winding of the deformable containers 30 with successive rounds of extensible film 50, a further stage of winding using successive rounds of film 50 can be made, of all the layers of the containers 30 deposited on the pallet 40 and of the pallet itself 50, so that during this stage too the extensible film 50 is arranged partially below the pallet 40, and is thus anchored thereto. This stage of winding, which can be defined as "total", is done continuously, i.e. without interruption, with a descending movement of the reel of extensible film 50. The extensible film 50 is thus wound in descending rounds, starting from the layer of deformable containers 30 deposited at the top of the pile and going down to include the pallet 40 itself.

Advantageously a further stage of stabilisation and consolidation of the complete pallet 40 is performed subsequently to the final and total winding stage, by applying stabiliser straps about the pallet and the layers of deformable containers. The straps are tightened about the finished pallet, i.e. at the end of the depositing of the layers of deformable containers 30 and the winding thereof by the extensible film 50, with the arranging of the film 50 above the final layer of deformable containers 30. The straps are deposited about the finalised pallet in a direction going from the top to the bottom, and the number of straps can vary from 2 to 4, as is considered necessary.

As has already been mentioned, the winding stages of the pallet and the containers 30 are performed by means of a reel of extensible film 50 which rotates, unwinding, about the pallet 40, and at the same time translates upwards along a vertical direction. The reel is supported at a free end of a robot arm which, apart from performing the above-described movements, is also able to orient the reel in a horizontal and vertical position.

Preferably the process is used in a plant in which the spreading of a layer of glue on at least a portion of the deformable containers 30 is done at a first work station, while the remaining stages are done at a second work station, after transfer of the containers 30 from the first station to the second station.

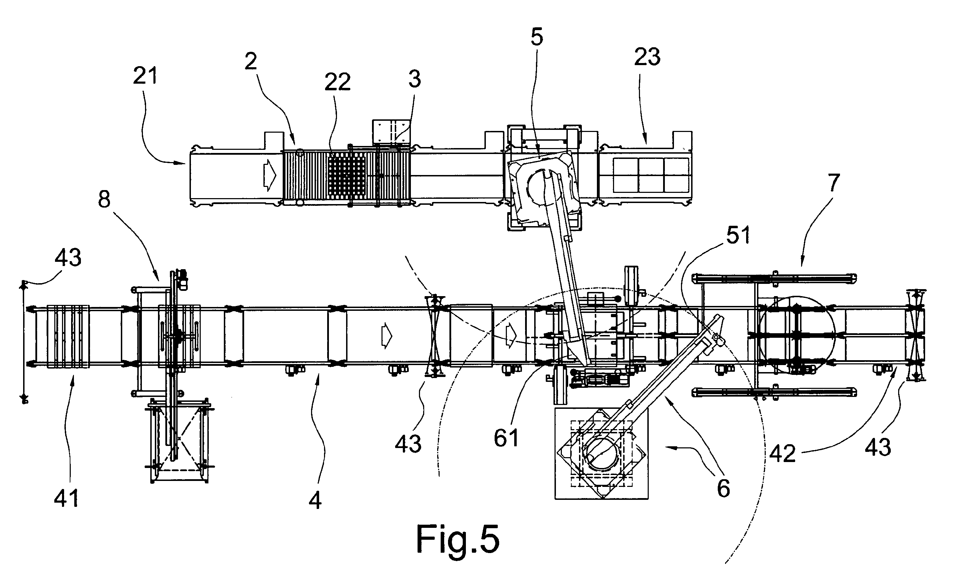

The plant is schematically illustrated in figure 5 in an overall plan view. In the illustration of the plant, the single devices actuating the stages of the plant are indicated schematically as they are of known type.

The plant comprises a first transport line 2 for conveying deformable containers 30. At a determined position the first transport line 2 is located at a spraying device 3 for the glue, which directs the glue onto the deformable containers 30 transiting on the first transport line 2. The first transport line 2 exhibits a loading station 21 for the deformable containers 30, a rotation device 22, predisposed to orient the containers 30 about a vertical axis, an unloading station 23 for the containers 30, from which the containers 30 are removed by a transfer and positioning device 5, means 24 for detecting the position of the containers 30 and for controlling the activation of the devices operating along the first transport line 2.

The plant further comprises a second transport line 4 for transporting the pallets 40 and a transfer and positioning device 5 for transporting the deformable containers 30 from the first transport line 2 to the second transport line 4. The transfer and positioning device 5, which is also suitable for positioning the containers 30 on the pallets 40 transiting on the second transport line 4, comprises preferably a robot arm provided with a gripping head equipped with suckers, which are predisposed to attach to an upwards-facing portion of the deformable containers 30.

A winding device 6 is predisposed to wind one or more layers of extensible film 50 about the pallets 40 and the deformable containers 30 deposited on the pallet 40.The winding device 6 is preferably arranged along the second transport line 4 and operates on the pallets 40 transiting on the second transport line 4. The winding device 6 comprises a robot arm, which is the object of a patent application by the applicant. The robot arm is represented only schematically in the figures, in which a free end thereof is visible, to which a reel 51 for unwinding extensible film is supported. The robot arm can orient the reel 51 of film horizontally or vertically and can translate the reel about the pallet 40. The winding device 6 is provided with a raisable platform 61 for supporting a pallet 40, which platform 61 is mobile from a position at which it is level with the second transport line 4 and a position in which it is raised above the second transport line 4. The raisable platform 61, which the reel 51 translates around, is raised with respect to the second transport line 4 to facilitate the winding of the loaded pallet 40 and to enable the extensible film 50 to be arranged at least partially also below the pallet 40. As can be seen in the accompanying figures of the drawings, the dimensions of the raisable platform 61 are such that the pallet 40, when resting on the platform 61, peripherally projects with respect to the platform, so it is possible that during the winding stage the reel 51 can translate vertically up to a position in which it is at least partially below the platform and the extensible film 50 is arranged as described. The winding device 6 further comprises at least a pair of pliers, of known type and not illustrated, for gripping and cutting the extensible film 50.

Along the second transport line 4 and downstream of the winding device 6 with respect to the advancement direction of the pallets 40 is located a device for applying straps 7 of known type and only schematically illustrated: this device applies stabiliser straps about the pallets 40, which each contain a determined number of deformable containers 30 and are wound using the extensible film 50 by the winding device 6. The strapping device 7 is provided with a rotating base for resting a pallet 40 on, which base can orient the pallet 40 about a vertical axis thereof.

A further device which can be located along the second transport line 4, and which is represented only schematically as it is of known type, is a positioning device 8 of at least one base sheet on the pallets 40 before containers 30 are deposited on the pallets 40. This device is located in an upstream position with respect to the devices described up to now.

Similarly to the first transport line 2, the second transport line 4 exhibits a loading station 41 for the pallets 40, an unloading station 42 of the pallets 40, for unloading pallets 40 at the end of the above-described operations, and for the control of the activation of the devices operating along the second transport line 4.

The plant enables the stages of the process of the invention to be performed. The deformable containers 30 transit along the first transport line 2 from the loading station 20 towards the unloading station 23. During their run, the containers 30 pass through the straightening device 22 and are oriented correctly thereby; then they pass on to the sprayer device 3, at which a layer of glue is deposited on an upwards-facing portion of the containers 30. Then, the deformable containers 30 reach the loading station 23, at which they are halted to await removal by the transfer and positioning device 5. In the preferred embodiment the containers 30 are in single-file transit, while in other embodiments of the plant they could be in transiting in multiple file, in two parallel lines or otherwise.

The transfer and positioning device 5 removes a determined number of containers 30 at a time and transfers them to the second transport line 4, positioning them on a pallet 40. The pallets 40, which are in step-motion along the second transport line 4, come to a rest at a station in which the transfer and positioning device 5 deposits the containers 30. Supposing a first pallet has to be filled, the transfer and positioning device 5 deposits a determined number of initial layers of deformable containers 30 on the pallet, in a station located upstream of the winding device 6. Once the initial layers of deformable containers 30 have been deposited, the second transport line 4 moves and transports the pallet 40 and the initial layers of deformable containers 30 deposited on it to the winding device 6, which actuates the first stage of the winding. While the winding device 6 performs the winding of the preceding pallet 40, the transfer and positioning device 5 deposits the initial layers of the deformable containers 30 on a new pallet 40 which, at the same time as the transfer of the first pallet to the winding device 6, is positioned at the deposit station of the transfer and positioning device 5. When the first winding stage of the first pallet 40 ends the transfer and positioning device 5 deposits the remaining layers of containers 30 on the first pallet, alternating operations with the operations of the winding of the rounds of extensible film 50 performed by the winding device 6. When the first pallet is all wound, the second transport line 4 moves and translates the first pallet to the strapper device 7, the second pallet to the winding device 6 and a third pallet to the transfer and positioning device 5 deposit station. From this moment the various operations described are repeated identically. The arrangement of the single deformable containers 30 in the various layers deposited on the pallet 40 can be very varied, depending on the sizes and shapes of the deformable containers themselves.

The invention offers important advantages.

The wrapping of the deformable containers is made of a cheap and easily- eliminable material which can be stocked in great quantities without using up much space.

The use of a glue for anchoring the layers of containers enables the use of a hopper to be obviated, which hopper is necessary in the known process deposited by the applicant. The absence of the hopper means that a high-width film can be used to wind up the pallet, which overall leads to a reduction in film used as in the prior art. The high width of the extensible film enables a complete cover of the top of the pallet to be obtained, should this be required, avoiding application of hoods of any type and further increasing the savings in material and process times.

The plant and process described can easily be integrated into high-speed production lines: the winding of the pallet is very simple and rapid and can thus be actuated in lines following the filling and closure of the bags. The winding of the pallets is actuated at the same time as the composition thereof, which is done by successive depositing of the bags, thus the cycle times are the same with respect to those cases in which metal crates or large sacks are used. Pallets stacked according to the invention are easily transportable and moveable using traditional means, for example lift trucks or AGV vehicles. The packing is not necessarily completely destroyed in order to remove the bags; it is sufficient to remove successive portions thereof. The pallet thus keeps its shape and its stability even during use, and sack removal is practical and easy.

## Claims

1. A process for palletising deformable containers, **characterised in that** it comprises following stages:
spreading a layer of glue over at least a portion of the deformable containers (30);
depositing at least one layer of deformable containers (30) on a pallet (40) in such a way that the portion of the deformable containers 30 on which the glue is spread is facing in an upwards direction;
winding at least one circumferential round of extensible film (50) around the at least one layer of containers (30) and the pallet (40), so that the extensible film (50) is wrapped at least partially below the pallet (40), and is anchored to the pallet (40);
progressively depositing, in successive overlying layers, a determined number of deformable containers (30) on the pallet (40), so that a portion of the deformable containers (30) on which the glue is spread is facing upwards;
progressive winding of successive circumferential rounds of the extensible film (50) around the layers of deformable containers (30); the progressive winding being done in such a way that at least a length of extensible film (50) is arranged about each layer of deformable containers (30) successively to the laying of the deformable containers (30) on the underlying layers thereof.

2. The process of claim 1, **characterised in that** the progressive laying of the layers of deformable containers (30) with successive rounds of extensible film (50) comprises a fmal stage in which one or more rounds of extensible film (50) are wound about a top layer of the layers of deformable containers (30) so that the extensible film (50) is arranged at least partially above the top layer of deformable containers (30).

3. The process of claim 2, **characterised in that** following the final stage of the progressive winding of the layers of deformable containers (30) with successive rounds of extensible film (50), the process comprises a laying of at least a layer of the extensible film (50) above the top layer of deformable containers (30), so that the at least a layer of the extensible film (50) completely covers the top layer of the deformable containers (30).

4. The process of claim 2 or 3, **characterised in that** it comprises, following a completion of the progressive winding of the layers of deformable containers (30), a further stage of winding is performed, with successive rounds of the extensible film (50), on all the layers of deformable containers (30) deposited on the pallet (40) and also the pallet (40), so that the extensible film (50) is arranged at least partially below the pallet (40).

5. The process of any one of the preceding claims, **characterised in that** it comprises, following the stage of progressively winding the extensible film (50) about all the layers of deformable containers (30) deposited on the pallet (40) and also the pallet (40), a stage of arranging stabiliser straps about the pallet (40) and the layers of deformable containers (30).

6. The process of any one of the preceding claims, **characterised in that** the spreading of the layers of glue is achieved using a spraying technique of the glue.

7. The process of any one of the preceding claims, **characterised in that** the stage of the spreading of the glue on at least a portion of the deformable containers (30) is done in at least a first work station, remaining stages being done in at least a second work station, after transfer of the deformable containers (30) from the at least a first work station to the at least a second work station.

8. The process of any one of the preceding claims, **characterised in that** the winding with extensible film (50) of the layers of deformable containers (30) and the pallet (40) on which the deformable containers (30) are deposited is performed using a robot arm which at a free end thereof supports a reel of the extensible film (50), the robot arm being able to orient the reel in a horizontal position and a vertical position and also being able to translate the reel about the pallet (40).

9. A plant for palletising deformable containers (30), **characterised in that** it comprises:
a first transport line (2) for transporting the deformable containers (30);
a spray device (3) for glue, located in a predetermined position along the first transport line (2) so that it can spray the glue onto the deformable containers (30) transiting on the first transport line (2);
a second transport line (4) for transporting pallets (40);
a transfer and positioning device (5) for transferring the deformable containers (30) from the first transport line (2) to the second transport line (4) and for positioning the deformable containers (30) onto the pallets (40) transiting on the second transport line (4);
a winding device (6), predisposed to wind one or more layers of extensible film about the pallets (40) on which a predetermined number of deformable containers (30) are deposited.

10. The plant of claim 9, **characterised in that** it comprises a strapper device (7), predisposed to apply stabiliser straps about the pallets (40) supporting the predetermined number of deformable containers (30) and wound about with the extensible film (50); the strapper device (7) being provided with a rotating base on which a single pallet can be rested, which rotating base can rotate the single pallet about a vertical axis thereof.

11. The plant of claim 9, **characterised in that** it comprises a device (8) for positioning at least a base sheet on the pallets (40) before the deformable containers (30) are deposited on the pallets (40).

12. The plant of claim 9, **characterised in that** a transfer and positioning device (5) comprises a robot arm having a gripping head provided with suckers which suckers are predisposed to attach to an upper portion of the deformable containers (30).

13. The plant of claim 9, **characterised in that** the winding device (6) comprises: a robot arm which at a free end thereof supports a reel of the extensible film (30), the robot arm being able to orient the reel in a horizontal and in a vertical position and also being able to translate the reel about the pallet (40); a raisable platform for supporting a pallet (40), which raisable platform is mobile between a position in which the raisable platform is at a level of the second transport line (4) and a position in which the raisable platform is raised above the second transport line (4), about which second transport line (4) the raisable platform translates the reel; at least a pair of pliers for gripping and cutting the extensible film (30).

14. The plant of claim 9, **characterised in that** the first transport line (2) for transporting deformable containers (30) exhibits a loading station for deformable containers (30), a rotation device for orienting the deformable containers (30) about a vertical axis thereof, a loading station of the deformable containers (30) from which the deformable containers (30) are removed by the transfer and positioning device (5), means for detecting a position of the deformable containers (30) and for controlling activation of devices operating along the first transport line (2).

15. The plant of claim 9, **characterised in that** the second transport line (4) for transporting the pallets (40) exhibits a loading station of the pallets (40), an unloading station of the pallets (40) supporting a predetermined number of the deformable containers (30), means for detecting a position of the pallets (40) and for controlling activation of devices operating along the second transport line (4).
